# EUROPÄISCHE PATENTSCHRIFT

(11) **EP 1 798 331 B1**
(45) Veröffentlichungstag und Bekanntmachung des Hinweises auf die Patenterteilung: **26.05.2010**
(21) Anmeldenummer: 06023177.6
(22) Anmeldetag: 08.11.2006
(51) Int. Cl.: D21B 1/32, D21D 5/02, D21D 5/18, D21D 5/24, D21F 1/70, D21F 1/80

(54) **Verfahren zur Dispergierung von Papierfaserstoffen**
Process for dispersing pulp
Procédé pour disperser une pulpe de fibres de papier

(30) Priorität: 17.12.2005 DE 102005060474
(43) Veröffentlichungstag der Anmeldung: 20.06.2007
(73) Patentinhaber: Voith Patent GmbH, 89522 Heidenheim (DE)
(72) Erfinder: Dockal-Baur, Jürgen, 88273 Fronreute-Fronhofen (DE); Selder, Harald, 88281 Schlier (DE)

(56) Entgegenhaltungen:
- EP-A- 1 728 918
- EP-A1- 0 354 307
- EP-A1- 0 888 819
- DE-A1- 10 256 519

## Beschreibung

Die Erfindung betrifft ein Verfahren zur Dispergierung von Papierfaserstoffen gemäß dem Oberbegriff des Anspruchs 1.

Verfahren der o.g. Art werden z.B. zur Qualitätsverbesserung von Faserstoffen eingesetzt, die aus Altpapier gewonnen wurden. Es ist bekannt, dass Papierfaserstoffe durch Dispergieren homogenisiert und dadurch wesentlich verbessert werden können. Dazu wird ein hochkonsistenter Papierfaserstoff hergestellt, der zumeist einen Trockengehalt zwischen 15 und 35 % aufweist. In vielen Fällen wird bei einer Temperatur dispergiert, die weit über der Umgebungstemperatur liegt. Disperger, die für solche Verfahren eingesetzt werden, haben eine hohe Energiedichte. Die Energie für die auf den Papierfaserstoff übertragene spezifische Arbeit mit 30 bis 200 kWh/t stellt einen wesentlichen Kostenfaktor für das Verfahren dar.

Durch das Eindicken wird ein beträchtlicher Teil des vorher noch im Faserstoff vorhandenen Wassers ausgepresst, wodurch erstens seine Viskosität bei der Dispergierung wesentlich ansteigt und zweitens gegebenenfalls weniger Wasser mit erwärmt werden muss. Eine verwendbare Maschine für die Eindickung ist die Schneckenpresse. Bei einer Schneckenpresse wird die Faserstoffsuspension zwischen einer Förderschnecke und einem diese umgebenden gelochten Mantel ausgepresst, wobei das Wasser durch die Löcher des Mantels austritt. Der dabei entstehende hochkonsistente Papierfaserstoff wird axial aus der Maschine ausgedrückt. Es kann aber auch mit einer Siebpresse entwässert werden, die bekanntlich ein oder zwei umlaufende Endlossiebe aufweist.

Aus der Publikation "Wochenblatt für Papierfabrikation", Heft 7/1978, Seiten 275 bis 277, ist ein Dispergierverfahren dieser Art bekannt, bei dem eine Siebpresse zur Eindickung verwendet wird, die den Feststoff vom Wasser (Filtrat) trennt. Der dabei unvermeidliche Feststoffverlust im Filtrat bleibt unter 5 %.

Aus der DE 102 56 519 ist ein anderes Verfahren bekannt, bei dem eine Fraktionierung vor einer Dispergierung stattfindet. Dabei teilt die Fraktionierung in Kurzfasern und Langfasern auf. Die Langfaserfraktion wird eingedickt und dispergiert.

In der Regel enthält eine aus Altpapier gewonnene Suspension nicht nur die erwünschten Papierfasern und Füllstoffe, sondern auch Störstoffe, also überwiegend faserfremdes Material, das entfernt werden muss, um die Qualitätsanforderungen an das aus dem Altpapier hergestellte Papier zu erfüllen. Eine sehr effektive Methode, um auch kleine (aber störende) Verunreinigungen zu entfernen, ist das Flotationsverfahren, das schon seit langer Zeit in der Papier erzeugenden Industrie angewandt wird. Dieses Verfahren arbeitet sehr effektiv, insbesondere bei Druckfarben und Klebepartikeln (Stickies). Um eine gute Reinigungswirkung bei hoher Faserausbeute zu erhalten, werden Flotationsanlagen oft mehrstufig betrieben. Dabei ist dann die folgende (z.B. Sekundärstufe) eine Flotationsvorrichtung, die vom Rejekt (Schaum) der Primärstufe gespeist wird.

Darüber hinaus ist es oft günstig, mehrere ein- oder mehrstufige Flotationsanlagen nacheinander zu schalten, d.h. dafür zu sorgen, dass dieselbe Faserstoffsuspension mindestens zwei Mal durch eine Flotationsanlage geführt wird. Besondere Vorteile ergeben sich durch die Kombination von Dispergierung und Flotation in einem Aufbereitungsverfahren. Technologisch optimal ist eine erste Flotation ("Flotation 1 "), der eine Dispergierung und eine zweite Flotation ("Flotation 2") folgen. Der Aufwand, der bei der Durchführung solcher Verfahren getrieben wird, ist natürlich beträchtlich.

Es ist Aufgabe der Erfindung, ein Verfahren zu schaffen, das eine Dispergierung umfasst und das besonders effektiv und wirtschaftlich auszuführen ist.

Diese Aufgabe wird durch die im Kennzeichen des Anspruchs 1 genannten Merkmale vollständig gelöst.

Erfindungsgemäß wird die Fraktionierung so durchgeführt, dass möglichst alle Fasern in die Grobfraktion gelangen. Die Feinfraktion enthält dann wenig Fasern (auch wenig Kurzfasern), aber einen großen Teil der organischen und anorganischen Feinstoffe. Dabei sind Aufteilungen möglich und sinnvoll, bei denen z.B. bis zu 50 % des im Einlauf zur Fraktionierung 3 zugeführten Feststoffes in die Feinfraktion F gelangen. Je nach Anforderungen und Rohstoffen können hierfür auch kleinere Werte eingestellt werden, insbesondere dann, wenn der Rohstoff einen geringen Feinstoffanteil aufweist. Andererseits ist auch ein Minimum an Feststoffen in der Feinfraktion F erforderlich, z.B. 5 bis 10 %, damit nicht ein Filterprozess, sondern eine Fraktionierung ausgeführt wird. Der Anteil der Fasern wird in der Regel als Rückstand des Siebes R 100 nach Bauer-McNett ermittelt (Labor-Methode nach TAPPI Standard T 233). Feinstoffe fallen in derselben Analyse als Durchlauf des 100-mesh-Siebes an. Vorteilhaft ist eine Fraktionierung mit einer Waschvorrichtung oder einem entsprechend ausgestalteten und betriebenen Drucksortierer.

Wird die so gebildete Grobfraktion in einem an sich bekannten Disperger bearbeitet, hat das bedeutende Vorteile:
1. Die durch den Disperger geführte Feststoffmenge ist kleiner, wodurch die Aggregate zur Eindickung und Dispergierung ebenfalls kleiner und ihr Energieverbrauch geringer werden. Außerdem wird die Eindickung wegen des Fehlens schmieriger Stoffe leichter.
2. Die Feinstoffe mit ihrem schmierigen Verhalten fehlen bei der Dispergierung. Dadurch wird bei gleicher Konsistenz die Faser-Faser-Reibung stärker, was zur Folge hat, dass die Fasern intensiver aktiviert werden (Wasserstoffbrückenbildung bei der Papierherstellung) und die Störstoffe (z.B. stickies) besser zerrieben werden. Da andererseits oft auch schon eine geringere Konsistenz bei der Dispergierung ausreicht, kann wiederum apparative Kapazität eingespart werden.
3. Auch abrasive Feinstoffe, wie z.B. Füllstoffe fehlen bei der Dispergierung. Die Standzeit der Dispergergarnituren verlängert sich.
4. Ein Einreiben von feinen Schmutzstoffen in den Faserstoff tritt beim Dispergieren nicht mehr auf. Der Stoff wird sauberer.
5. Im Gegensatz zur Dispergierung einer Langfaserfraktion (bei "klassischer Fraktionierung") werden mit dem neuen Verfahren alle Fasern, also auch die Kurzfasern, dispergiert.
6. Dient die Dispergierung als Vorbereitung einer nachfolgenden Flotation oder Wäsche, führt die verbesserte Ablösung von an den Fasern auftretenden Störstoffpartikeln zu einer höheren Reinheit des Gutstoffes.

Die Erfindung wird erläutert an Hand von Zeichnungen. Dabei zeigen:
- Figur 1:: Schema mit einer vorteilhaften Ausführung des erfindungsgemäßen Verfahrens;
- Figur 2:: eine Variante des Verfahrens;
- Figur 3:: eine weitere Variante.

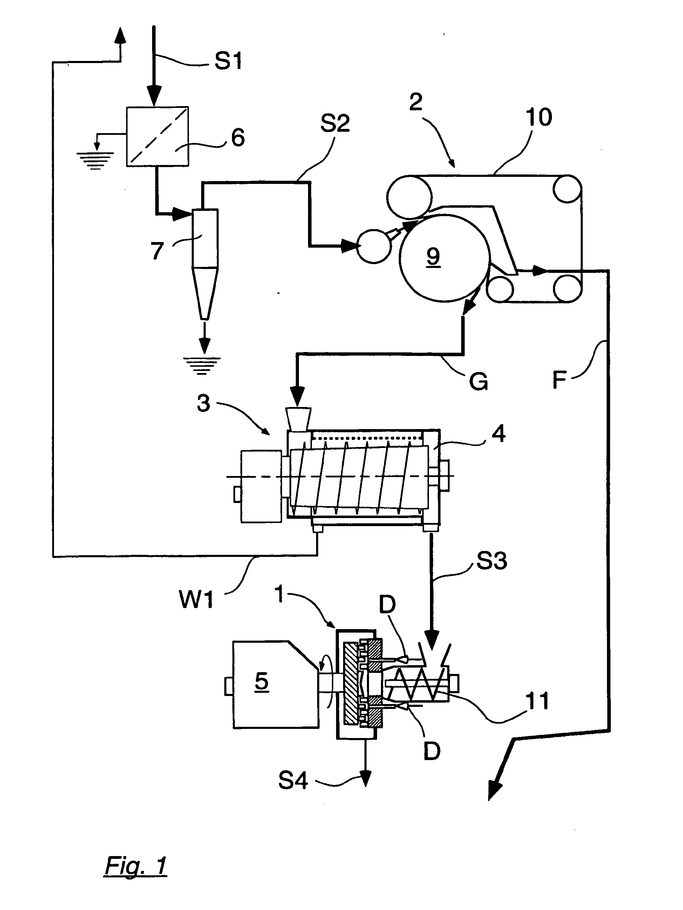

In einer vereinfachten Darstellung zeigt die Fig. 1 ein Ausführungsbeispiel mit den wichtigsten Apparaturen, die man bei Durchführung des erfindungsgemäßen Verfahrens verwenden kann. Die z.B. in einem hier nicht gezeigten Stofflöser erzeugte Papierfaserstoffsuspension S1 wird durch einen Drucksortierer 6 und Dickstoffreiniger 7 geführt, wodurch grobe Störstoffe des Altpapiers entfernt werden. In Stofflösern hat die Suspension meist eine Konsistenz, also einen Feststoffgehalt zwischen 3 und 6 %. Es sind aber auch Auflöseverfahren bekannt, bei denen ein Feststoffgehalt von über 12 % eingestellt wird. Die genannten Trennvorrichtungen (Drucksortierer und Dickstoffreiniger) sind exemplarisch zu verstehen. Es sind diverse Möglichkeiten bekannt, um eine verschmutzte Papierfasersuspension so weit zu reinigen, dass sie in den hier beschriebenen folgenden Apparaten verarbeitet werden kann. Die gereinigte Papierfaserstoffsuspension S2 gelangt als nächstes in eine Fraktioniervorrichtung 2 zur Bildung einer Grobfraktion G und Feinfraktion F.

Durch Art der Fraktioniervorrichtung 2 und die Betriebsbedingungen bei der Fraktionierung lässt sich die Aufteilung des Faserstoffes in Grob- und Feinfraktion einstellen. Dabei sollen hier möglichst viele Fasern, seien sie nun kurz oder lang, in die Grobfraktion G gelangen und die Feinfraktion F im Wesentlichen organische und anorganische Feinstoffe enthalten, das sind insbesondere Faserfeinstoff, Füllstoffe sowie die auszusortierenden Schmutzstoffe. Eine solche spezielle Fraktionierung wird bei einer Verfahrensausführungsform gemäß Fig. 1 mit Hilfe einer Waschvorrichtung erreicht. Das Filtrat der Waschvorrichtung ist dann die Feinfraktion F. Solche Waschvorrichtungen für Faserstoffe sind bekannt. Sie dienen dazu, nicht nur das Wasser vom Feststoff zu trennen (Filter), sondern sollen auch den Feststoff selbst fraktionieren. Eine besonders geeignete technische Ausführungsform und die bevorzugten Parameter sind z.B. in der Patentschrift DE 30 05 681 beschrieben. Bei einer solchen Waschvorrichtung wird die auszuwaschende Suspension S zwischen einen undurchlässigen Zylinder 31 und ein durchlässiges umlaufendes Siebband 10 mit geringer Konsistenz turbulent eingespritzt. Der zwischen Siebband 10 und Zylinder 9 entwässerte und gewaschene Faserstoff wird anschließend als Grobfraktion G zur Eindickung und Dispergierung geführt. Es sind auch Vorrichtungen mit zwei umlaufenden Siebbändern bekannt, die hier zur Fraktionierung geeignet sind. Ein Beispiel zeigt die EP 0 341 913.

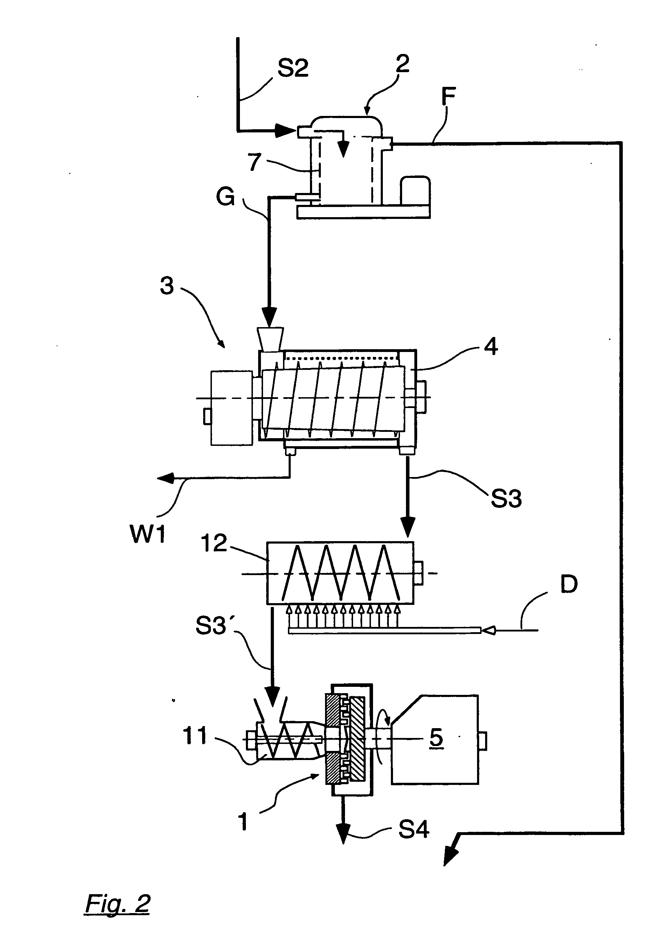

Die Fraktionierung der Papierfaserstoffsuspension S2 lässt sich aber auch durch Verwendung eines Drucksortierers betreiben, was in dem Anlagenschema der Fig. 2 gezeigt ist. Die spezielle Fraktionierung mit einem Drucksortierer wird durch relativ geringe Konsistenz begünstigt und dadurch, dass für die Sieböffnungen relativ kleine Werte, also z.B. ca. 0,3 bis 0,8 mm Loch oder 0,1 bis 0,15 mm Schlitz, gewählt werden. Die Überlaufrate wäre relativ hoch, z.B. ca. 50 %, wobei sich solche Werte auf den jeweiligen Feststoffgehalt der Suspension beziehen.

Bekanntlich kann man Fasern aber auch in Hydrozyklonen fraktionieren, wobei eine Konsistenz zwischen 0,3 % und 0,7 % besonders günstig ist.

Durch die sich nun anschließende Eindickvorrichtung 3 - hier eine Schneckenpresse 4 - wird aus der Grobfraktion G ein höherkonsistenter Papierfaserstoff S3 gebildet. Das abgepresste Wasser W1 kann mit Vorteil wieder zum Auflösen verwendet werden.

Anschließend erfolgt die Dispergierung des eingedickten Stoffes S3. Dieser wird über eine Zuführschnecke 11 zentral zwischen zwei relativ zueinander bewegte Dispergergarnituren geführt, zwischen denen er dispergiert wird und danach als homogener Faserstoff S4 aus dem Gehäuse des Dispergers 1 herausfällt. Der Rotor dieses Dispergers 1 wird durch den Dispergerantrieb 5 angetrieben. Der Faserstoff S4 kann danach, wenn erforderlich, durch eine hier nicht gezeichnete Flotation von Störstoffen gereinigt werden. Dadurch können gezielt die Störstoffe abgeschieden werden, die durch die Dispergierung von den Fasern getrennt wurden. Die Flotation des dispergierten Faserstoffes S4 kann separat oder gemeinsam mit der Feinfraktion F erfolgen.

Wie bereits erwähnt, findet eine gute Dispergierung zumeist bei erhöhten Temperaturen statt. Bei dem in Fig. 1 gezeigten Beispiel ist die hohe Stofftemperatur dadurch gewährleistet, dass unmittelbar in den Disperger 1 Dampf D durch eine Anzahl von Dampfleitungen, die hier nur angedeutet sind, eingespeist wird. Diese moderne Form der Stofferwärmung ist z.B. in der DE 197 12 653 A1 beschrieben. Sie hat neben dem drastisch reduzierten apparativen Aufwand den Vorteil von kurzen Verweilzeiten, was wiederum die Regelung der ganzen Anlage erleichtert. Eine andere Möglichkeit, den Stoff zu erwärmen, zeigt die Variante in Fig. 2. Dabei handelt es sich um eine Ausführungsform des Verfahrens, bei der der hochkonsistente Papierfaserstoff S3 in eine Heizschnecke 12 eingeführt wird. Der erforderliche Dampf D wird durch eine Anzahl von Öffnungen in das Innere dieser Heizschnecke 12 eingeblasen. Auf Grund der technisch-physikalischen Verhältnisse muss in der Regel eine Verweilzeit von mehreren Minuten vorgesehen werden, bis der Stoff die erforderliche Temperatur hat und als aufgeheizter Papierfaserstoff S3' in den Disperger 1 geführt werden kann.

Es versteht sich, dass die in Fig. 2 beschriebene Aufheizung auch bei einer Anlage gemäß Fig. 1 möglich wäre und dass umgekehrt die in Fig. 1 gezeigte Fraktioniervorrichtung 2 auch in einer Anlage gemäß Fig. 2 verwendbar ist.

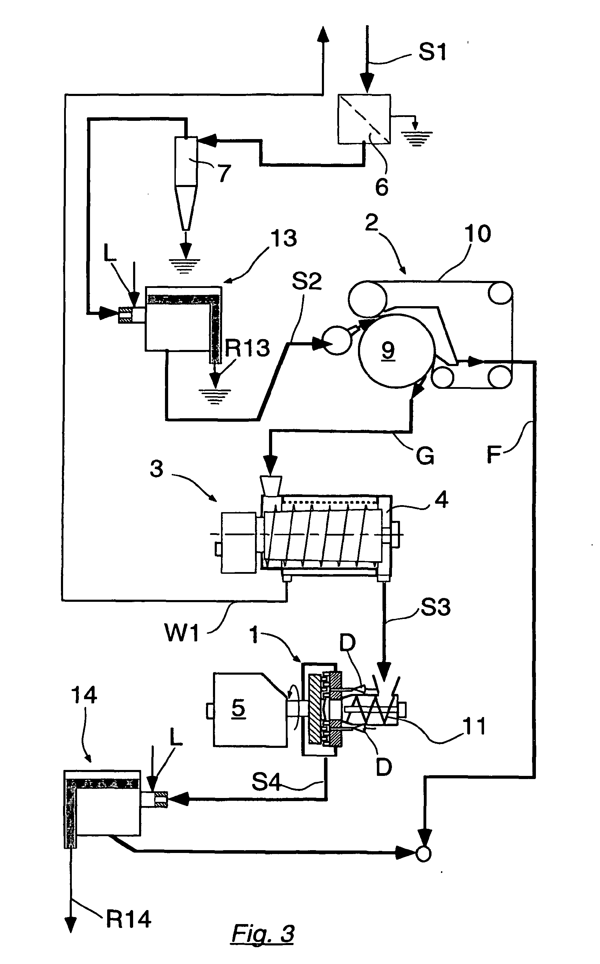

Wie bereits eingangs erläutert wurde, ergeben sich bei verschmutzten und/oder bedruckten Altpapierstoffen besondere Vorteile, wenn neben der Dispergierung mehrere Flotationen durchgeführt werden. In diesem Zusammenhang zeigt die Fig. 3 eine besonders vorteilhafte Ausführungsform des erfindungsgemäßen Verfahrens. Dabei wird die Papierfaserstoffsuspension S1 wiederum nach der schon erwähnten Reinigung in Drucksortierer 6 und Dickstoffreiniger 7 einer Flotationsanlage 13 zugeführt. Diese ist nur sehr schematisch gezeichnet, da solche Anlagen bekannt sind. Die eingeführte Suspension, meist mit einer Konsistenz zwischen 1 und 2 % wird mit Luft L versetzt und in der Flotationsanlage 13 flotiert, wobei die Störstoffe in den Schaum und damit den Rejekt R13 gelangen, während eine gereinigte Faserstoffsuspension S2 als Gutstoff gewonnen wird der Fraktioniervorrichtung 2 zugeführt wird. Die folgenden Verfahrensschritte sind dann ähnlich oder gleich, wie in den Fig. 1 und 2 bereits erläutert. Neu in dieser Figur 3 ist die Darstellung, dass der dispergierte Faserstoff S4 erneut einer weiteren Flotationsanlage 14 zugeführt wird, die ähnlich funktioniert, wie es bereits bei der Flotationsanlage 13 beschrieben wurde. Auch hier wird also ein Rejekt R14 in Form von Flotationsschaum gebildet, der insbesondere solche Störstoffe (Druckfarben, Klebpartikel) enthält, die bei der ersten Flotationsanlage 13 deshalb nicht entfernt werden konnten, da sie noch an den Fasern anhafteten. In diesem Fall hat also der Disperger 1 nicht nur den Faserstoff selbst homogenisiert und dadurch verbessert, sondern auch die Ablösung der Störstoffe bewirkt, um sie danach besser flotieren zu können. Dieses Verfahren bringt den besonderen ökonomischen Vorteil, dass die zweite Flotationsanlage 14 bedeutend kleiner ausgeführt werden kann als die erste Flotationsanlage 13, da in ihr nur ein Teil des Faserstoffs verarbeitet wird. Die Feinfraktion F der Fraktioniervorrichtung 2 nimmt also weder an der Dispergierung noch an der in der zweiten Flotationsanlage 14 durchgeführten Flotation teil. Nachteile sind dadurch nicht zu erwarten, da bei der Ausgestaltung dieses Verfahrens dafür ausreichend gesorgt ist, dass in der Feinfraktion F keine oder nur unwesentlich Anteile von mit Störstoffen verhafteten Fasern vorhanden sind.

## Patentansprüche

1. Verfahren zur Dispergierung eines Papierfaserstoffes mit folgenden Schritten:
Bereitstellung einer wasserhaltigen Papierfaserstoffsuspension (S1);
Fraktionierung der wasserhaltigen Papierfaserstoffsuspension (S1) in einer
Fraktioniervorrichtung (2), wobei eine Grobfraktion (G) und eine Feinfraktion (F) gebildet wird,
Eindickung und Dispergierung der Grobfraktion (G),
**dadurch gekennzeichnet,**
**dass** die Fraktionierung so durchgeführt wird, dass in der Grobfraktion (G) Kurzfasern und Langfasern und dass in der Feinfraktion (F) Feinstoffe angereichert werden.

2. Verfahren nach Anspruch 1,
**dadurch gekennzeichnet,**
**dass** als Fraktioniervorrichtung (2) eine Waschvorrichtung verwendet wird.

3. Verfahren nach Anspruch 2,
**dadurch gekennzeichnet,**
**dass** die Waschvorrichtung bei einer Konsistenz zwischen 0,6 und 2 %, vorzugsweise 0,8 bis 1,2 %, betrieben wird.

4. Verfahren nach Anspruch 2 oder 3,
**dadurch gekennzeichnet,**
**dass** die Waschvorrichtung mindestens ein umlaufendes endloses Siebband (10) aufweist, durch das die Trennung in Fraktionen erfolgt.

5. Verfahren nach Anspruch 4,
**dadurch gekennzeichnet,**
**dass** in der Waschvorrichtung eine Faserstoffschicht auf das Endlosband gebracht wird, deren Feststoff bezogenes Flächengewicht geringer ist als 150 g/m², vorzugsweise geringer als 100 g/m².

6. Verfahren nach Anspruch 4 oder 5,
**dadurch gekennzeichnet,**
**dass** das Siebband (10) mit einer Geschwindigkeit umläuft, die zwischen 200 und 1500 Meter pro Minute, vorzugsweise 400 bis 1200 Meter pro Minute, liegt.

7. Verfahren nach Anspruch 1,
**dadurch gekennzeichnet,**
**dass** als Fraktioniervorrichtung (2) ein Drucksortierer verwendet wird, der mit mindestens einem Sieb (8) ausgestattet ist.

8. Verfahren nach Anspruch 7,
**dadurch gekennzeichnet,**
**dass** die Öffnungen im Sieb (8) Schlitze sind, die eine Schlitzweite zwischen 0,08 und 0,2 mm, vorzugsweise 0,1 bis 0,15 mm, haben.

9. Verfahren nach Anspruch 7,
**dadurch gekennzeichnet,**
**dass** die Öffnungen im Sieb (8) Löcher sind.

10. Verfahren nach Anspruch 9,
**dadurch gekennzeichnet,**
**dass** die Öffnungen im Sieb (8) Rundlöcher sind, die einen Durchmesser zwischen 0,1 mm und 2 mm haben, vorzugsweise 0,3 mm bis 1,0 mm.

11. Verfahren nach Anspruch 7, 8, 9 oder 10,
**dadurch gekennzeichnet,**
**dass** die Einlaufkonsistenz in die Fraktioniervorrichtung (2) zwischen 0,6 und 3 %, vorzugsweise 0,8 und 1,5 %, liegt.

12. Verfahren nach Anspruch 1,
**dadurch gekennzeichnet,**
**dass** die Fraktionierung zumindest teilweise in Hydrozyklonen bei einer Konsistenz zwischen 0,1 und 2 %, vorzugsweise 0,3 bis 0,7 %, durchgeführt wird.

13. Verfahren nach einem der voran stehenden Ansprüche,
**dadurch gekennzeichnet,**
**dass** die Fraktionierung so eingestellt wird, dass eine Feinfraktion (F) gebildet wird, deren Feststoffanteil höchstens 50 % des Feststoffanteils der der Fraktioniervorrichtung (2) zugeführten Faserstoffsuspension (S2) beträgt.

14. Verfahren nach Anspruch 13,
**dadurch gekennzeichnet,**
**dass** die Fraktionierung so eingestellt wird, dass eine Feinfraktion (F) gebildet wird, deren Feststoffanteil höchstens 40 % des Feststoffanteils der der Fraktioniervorrichtung (2) zugeführten Faserstoffsuspension (S2) beträgt.

15. Verfahren nach Anspruch 14,
**dadurch gekennzeichnet,**
**dass** die Fraktionierung so eingestellt wird, dass eine Feinfraktion (F) gebildet wird, deren Feststoffanteil höchstens 30 % des Feststoffanteils der der Fraktioniervorrichtung (2) zugeführten Faserstoffsuspension (S2) beträgt.

16. Verfahren nach Anspruch 15,
**dadurch gekennzeichnet,**
**dass** die Fraktionierung so eingestellt wird, dass eine Feinfraktion (F) gebildet wird, deren Feststoffanteil höchstens 20 % des Feststoffanteils der der Fraktioniervorrichtung (2) zugeführten Faserstoffsuspension (S2) beträgt.

17. Verfahren nach einem der voran stehenden Ansprüche,
**dadurch gekennzeichnet,**
**dass** die Fraktionierung so eingestellt wird, dass eine Feinfraktion (F) gebildet wird, deren Feststoffanteil mindestens 10 %, vorzugsweise mindestens 20 % des Feststoffanteils der der Fraktioniervorrichtung (2) zugeführten Faserstoffsuspension (S2) beträgt.

18. Verfahren nach einem der voran stehenden Ansprüche,
**dadurch gekennzeichnet,**
**dass** der Anteil der Fasern in der Feinfraktion (F) kleiner ist als 20 %.

19. Verfahren nach Anspruch 18,
**dadurch gekennzeichnet,**
**dass** der Anteil der Fasern in der Feinfraktion (F) kleiner ist als 10 %.

20. Verfahren nach Anspruch 19,
**dadurch gekennzeichnet,**
**dass** der Anteil der Fasern in der Feinfraktion (F) kleiner ist als 5 %.

21. Verfahren nach einem der voran stehenden Ansprüche,
**dadurch gekennzeichnet,**
**dass** der dispergierte Faserstoff (S4) in einer Flotationsanlage (14) von zumindest einem Teil der Störstoffe befreit wird.

22. Verfahren nach Anspruch 21,
**dadurch gekennzeichnet,**
**dass** die Flotation des dispergierten Faserstoffes (S4) ohne die Feinfraktion (F) durchgeführt wird.

23. Verfahren nach einem der voran stehenden Ansprüche,
**dadurch gekennzeichnet,**
**dass** die Faserstoffsuspension (S1, S2) stromaufwärts der Fraktioniervorrichtung (2) in einer Flotationsanlage (13) von zumindest einem Teil der Störstoffe befreit wird.

24. Verfahren nach Anspruch 21,
**dadurch gekennzeichnet,**
**dass** die Flotation des dispergierten Faserstoffes (S4) gemeinsam mit der Feinfraktion (F) durchgeführt wird.

## Claims

1. Process for dispersing a pulp, having the following steps:
providing an aqueous pulp suspension (S1);
fractionating the aqueous pulp suspension (S1) in a fractionator (2), a coarse fraction (G) and a fine fraction (F) being formed,
thickening and dispersing the coarse fraction (G),
**characterized in that**
the fractionation is carried out in such a way that short fibres and long fibres are concentrated in the coarse fraction (G) and fines are concentrated in the fine fraction (F).

2. Process according to Claim 1,
**characterized in that**
the fractionator (2) used is a washing apparatus.

3. Process according to Claim 2,
**characterized in that**
the washing apparatus is operated at a consistency between 0.6 and 2%, preferably 0.8 to 1.2%.

4. Process according to Claim 2 or 3,
**characterized in that**
the washing apparatus has at least one circulating endless screen belt (10), by means of which the separation into fractions is carried out.

5. Process according to Claim 4,
**characterized in that**
in the washing apparatus, a pulp layer whose weight per unit area based on solids is lower than 150 g/m², preferably lower than 100 g/m², is put onto the endless belt.

6. Process according to Claim 4 or 5,
**characterized in that**
the screen belt (10) circulates at a speed which is between 200 and 1500 m/min, preferably 400 to 1200 m/min.

7. Process according to Claim 1,
**characterized in that**
the fractionator (2) used is a pressure screen which is equipped with at least one screen (8).

8. Process according to Claim 7,
**characterized in that**
the openings in the screen (8) are slots which have a slot width between 0.08 and 0.2 mm, preferably 0.1 to 0.15 mm.

9. Process according to Claim 7,
**characterized in that**
the openings in the screen (8) are holes.

10. Process according to Claim 9,
**characterized in that**
the openings in the screen (8) are round holes which have a diameter between 0.1 and 2 mm, preferably 0.3 mm to 1.0 mm.

11. Process according to Claim 7, 8, 9 or 10,
**characterized in that**
the inlet consistency into the fractionator (2) is between 0.6 and 3%, preferably 0.8 and 1.5%.

12. Process according to Claim 1,
**characterized in that**
the fractionation is at least partly carried out in hydrocyclones at a consistency between 0.1 and 2%, preferably 0.3 to 0.7%.

13. Process according to one of the preceding claims,
**characterized in that**
the fractionation is adjusted in such a way that a fine fraction (F) is formed whose proportion of solids is at most 50% of the proportion of solids of the pulp suspension (S2) fed to the fractionator (2).

14. Process according to Claim 13,
**characterized in that**
the fractionation is adjusted in such a way that a fine fraction (F) is formed whose proportion of solids is at most 40% of the proportion of solids of the pulp suspension (S2) fed to the fractionator (2).

15. Process according to Claim 14,
**characterized in that**
the fractionation is adjusted in such a way that a fine fraction (F) is formed whose proportion of solids is at most 30% of the proportion of solids of the pulp suspension (S2) fed to the fractionator (2).

16. Process according to Claim 15,
**characterized in that**
the fractionation is adjusted in such a way that a fine fraction (F) is formed whose proportion of solids is at most 20% of the proportion of solids of the pulp suspension (S2) fed to the fractionator (2).

17. Process according to one of the preceding claims,
**characterized in that**
the fractionation is adjusted in such a way that a fine fraction (F) is formed whose proportion of solids is at least 10%, preferably at least 20%, of the proportion of solids of the pulp suspension (S2) fed to the fractionator (2).

18. Process according to one of the preceding claims,
**characterized in that**
the proportion of fibres in the fine fraction (F) is less than 20%.

19. Process according to Claim 18,
**characterized in that**
the proportion of fibres in the fine fraction (F) is less than 10%.

20. Process according to Claim 19,
**characterized in that**
the proportion of fibres in the fine fraction (F) is less than 5%.

21. Process according to one of the preceding claims,
**characterized in that**
the dispersed pulp (S4) is freed of at least some of the impurities in a flotation system (14).

22. Process according to Claim 21,
**characterized in that**
the flotation of the dispersed pulp (S4) is carried out without the fine fraction (F).

23. Process according to one of the preceding claims,
**characterized in that**
the pulp suspension (S1, S2) upstream of the fractionator (2) is freed of at least some of the impurities in a flotation system (13).

24. Process according to Claim 21,
**characterized in that**
the flotation of the dispersed pulp (S4) is carried out jointly with the fine fraction (F).

## Revendications

1. Procédé de dispersion d'une matière fibreuse pour papier, qui présente les étapes suivantes :
préparer une suspension aqueuse (S1) de matière fibreuse pour papier,
fractionner la suspension aqueuse (S1) de matière fibreuse pour papier dans un dispositif de fractionnement (2) pour former une fraction grossière (G) et une fraction fine (F),
épaissir et disperser la fraction grossière (G),
**caractérisé en ce que**
le fractionnement est réalisé de telle sorte que la fraction grossière (G) soit enrichie en fibres courtes et en fibres longues et **en ce que** la fraction fine (F) soit enrichie en matières fines.

2. Procédé selon la revendication 1, **caractérisé en ce que** comme dispositif de fractionnement (2), il utilise un dispositif de lavage.

3. Procédé selon la revendication 2, **caractérisé en ce que** le dispositif de lavage travaille à une consistance comprise entre 0,6 et 2 % et de préférence entre 0,8 et 1,2 %.

4. Procédé selon les revendications 2 ou 3, **caractérisé en ce que** le dispositif de lavage présente au moins une bande de tamis (10) en boucle sans fin à travers laquelle s'effectue la séparation en fractions.

5. Procédé selon la revendication 4, **caractérisé en ce qu'**une couche de matière fibreuse dont le poids par unité de surface rapporté aux solides est inférieur à 150 g/m² et de préférence inférieur à 100 g/m² est appliquée sur la bande sans fin dans le dispositif de lavage.

6. Procédé selon les revendications 4 ou 5, **caractérisé en ce que** la bande de tamis (10) circule à une vitesse située entre 200 et 1 500 mètres par minute et de préférence entre 400 et 1 200 mètres par minute.

7. Procédé selon la revendication 1, **caractérisé en ce que** comme dispositif de fractionnement (2), il utilise un classificateur sous pression doté d'au moins un tamis (8).

8. Procédé selon la revendication 7, **caractérisé en ce que** les ouvertures ménagées dans le tamis (8) sont des fentes dont la largeur est comprise entre 0,08 et 0,2 mm et de préférence entre 0,1 et 0,15 mm.

9. Procédé selon la revendication 7, **caractérisé en ce que** les ouvertures ménagées dans le tamis (8) sont des trous.

10. Procédé selon la revendication 9, **caractérisé en ce que** les ouvertures ménagées dans le tamis (8) sont des trous circulaires dont le diamètre est compris entre 0,1 mm et 2 mm et de préférence entre 0,3 mm et 1,0 mm.

11. Procédé selon les revendications 7, 8, 9 ou 10, **caractérisé en ce que** la consistance d'entrée dans le dispositif de fractionnement (2) est comprise entre 0,6 et 3 % et de préférence entre 0,8 et 1,5 %.

12. Procédé selon la revendication 1, **caractérisé en ce que** le fractionnement est réalisé au moins en partie dans des hydrocyclones à une consistance comprise entre 0,1 et 2 % et de préférence entre 0,3 et 0,7 %.

13. Procédé selon l'une des revendications précédentes, **caractérisé en ce que** le fractionnement est réglé de manière à former une fraction fine (F) dont la teneur en solides représente au plus 50 % de la teneur en solides de la suspension (S2) de matière fibreuse apportée au dispositif de fractionnement (2).

14. Procédé selon la revendication 13, **caractérisé en ce que** le fractionnement est réglé de manière à former une fraction fine (F) dont la teneur en solides représente au plus 40 % de la teneur en solides de la suspension (S2) de matière fibreuse apportée au dispositif de fractionnement (2).

15. Procédé selon la revendication 14, **caractérisé en ce que** le fractionnement est réglé de manière à former une fraction fine (F) dont la teneur en solides représente au plus 30 % de la teneur en solides de la suspension (S2) de matière fibreuse apportée au dispositif de fractionnement (2).

16. Procédé selon la revendication 15, **caractérisé en ce que** le fractionnement est réglé de manière à former une fraction fine (F) dont la teneur en solides représente au plus 20 % de la teneur en solides de la suspension (S2) de matière fibreuse apportée au dispositif de fractionnement (2).

17. Procédé selon l'une des revendications précédentes, **caractérisé en ce que** le fractionnement est réglé de manière à former une fraction fine (F) dont la teneur en solides représente au moins 10 % et de préférence au moins 20 % de la teneur en solides de la suspension (S2) de matière fibreuse apportée au dispositif de fractionnement (2).

18. Procédé selon l'une des revendications précédentes, **caractérisé en ce que** la teneur en fibres de la fraction fine (F) est inférieure à 20 %.

19. Procédé selon la revendication 18, **caractérisé en ce que** la teneur en fibres de la fraction fine (F) est inférieure à 10 %.

20. Procédé selon la revendication 19, **caractérisé en ce que** la teneur en fibres de la fraction fine (F) est inférieure à 5 %.

21. Procédé selon l'une des revendications précédentes, **caractérisé en ce que** la matière fibreuse (S4) dispersée est débarrassée au moins d'une partie des matières perturbatrices dans une installation de flottation (14).

22. Procédé selon la revendication 21, **caractérisé en ce que** la flottation de la matière fibreuse (S4) dispersée est réalisée sans la fraction fine (F).

23. Procédé selon l'une des revendications précédentes, **caractérisé en ce que** la suspension (S1, S2) de matière fibreuse est débarrassée d'au moins une partie des matières perturbatrices en amont du dispositif de fractionnement (2) dans une installation de flottation (13).

24. Procédé selon la revendication 21, **caractérisé en ce que** la flottation de la matière fibreuse (S4) dispersée est réalisée en commun avec la fraction fine (F).
